# EUROPEAN PATENT SPECIFICATION

(11) **EP 1 871 081 B1**
(45) Date of publication and mention of the grant of the patent: **10.12.2008**
(21) Application number: 07117885.9
(22) Date of filing: 31.10.2005
(51) Int. Cl.: H04M 1/22, G09G 3/34

(54) **Automatic screen and keypad brightness adjustment on a mobile handheld electronic device**
Automatische Helligkeitsanpassung für Bildschirm und Tastatur eines tragbaren elektronischen Gerätes
Réglage automatique de la luminosité de l'écran et du clavier sur un dispositif électronique portable

(43) Date of publication of application: 26.12.2007
(62) Divisional of application: 05110207.7
(73) Proprietor: Research In Motion Limited, Waterloo, Ontario N2L 3W8 (CA)
(72) Inventor: Kreek, Conrad Aleksander, Waterloo Ontario N2L 1X9 (CA); Mailloux, Jerry, Waterloo Ontario N2T 2X5 (CA); Hashi, Ahmed, Waterloo Ontario N2V 2K9 (CA); Robinson, James, Elmira Ontario N3B 3L1 (CA); Wu, Ken, Burlington Ontario L7S 2B4 (CA); Lowles, Robert, Waterloo Ontario N2T 2J5 (CA); Bockiing, Andrew Douglas, Waterloo Ontario N2K 3Y8 (CA); Brubacher-Cressman, Dale, New Hamburg Ontario N3A 1E4 (CA); Winter, Bruce, St. Agatha Ontario N0B 2L0 (CA)
(74) Representative: Rickard, David John

(56) References cited:
- EP-A- 1 505 567
- WO-A-00/41378
- US-B1- 6 798 395

## Description

The present application relates generally to electronic devices and more particularly to a method for automatically adjusting screen and/or keypad brightness on a mobile electronic device.

Liquid crystal display 'LCD' screen and keypad brightness on a handheld electronic device may be adjusted for different operating environments in order to provide an optimal user experience. For example, in outdoor or sunlight conditions the LCD backlight must be very bright in order to be readable, and the keypad backlight should be off to conserver battery power. In normal indoor or office conditions, the LCD backlight should operate at medium brightness while the keypad backlight is usually turned off. In dim or dark conditions, the LCD backlight must be at low intensity so as to avoid eye strain and the keypad backlight must be on.

Ambient lighting conditions can change rapidly as the user moves between different working environments. For example, walking from indoors to outdoors may render the LCD screen immediately unreadable unless the LCD backlight brightness is increased. Conversely, when the user moves from a bright environment into a dimly lit room, the keypad may be unreadable unless the keypad backlight is turned on.

Prior art arrangements have been implemented in GPS displays and laptop computers for providing basic automatic screen and keypad backlighting adjustment. However, none of such prior art backlighting algorithms are known to address independent control of LCD and keypad backlighting adjustment as a user moves between different ambient lighting conditions. Moreover, none of the known prior art addresses the problem of providing rapid backlight adjustment in response to a user removing his or her handheld electronic device from a wearable holster accessory, or the problem of detecting ambient light when the light sensor and message notification indicator for the device share a common light pipe, such as described in co-pending United States patent application US 2007/0019433, filed July 25, 2005, and entitled SHARED LIGHT PIPE FOR A MESSAGE INDICATOR AND LIGHT SENSOR.

WO00/41378 discloses a hand portable device which comprises a user interface, a light detector for detecting the light incident on at least part of the user interface, a comparator for comparing the light detected with a given threshold and control means for controlling an illuminator for illuminating the user interface in dependence upon the output of the comparator.

EP1505567 discloses a method and system for automatically adjusting a backlight intensity level for displays in electronic devices having a camera and digital backlight displays, such that the camera is used to determine an ambient light level and the backlight level is adjusted according to the determined ambient light level.

### GENERAL

According to one aspect of this specification, a method is described for preferably automatically adjusting screen and keypad brightness for optimum legibility under varying lighting conditions, with minimal eye strain and distraction to the user. Preferably, correct screen and keypad adjustments are made responsive to the user pulling his or her handheld device out of its holster notwithstanding non-optimal ambient light detection while the device is being removed from the holster. According to another aspect, the described method allows for ambient light detection in a handheld device where the light sensor and a message notification indicator share a common light pipe.

Therefore, according to the present specification a method is preferably set forth for automatically adjusting screen and keypad brightness on a mobile electronic device having a light sensor, display screen and keypad, comprising obtaining light level samples from said light sensor; and adjusting backlight intensity of said display screen independently of backlight intensity of said keypad responsive to said light level samples. Adjusting the backlight intensity of said display screen comprises comparing a median value of said samples to respective threshold values corresponding to screen-specific ambient lighting modes designated as 'DIM', 'OFFICE' and 'BRIGHT' modes of backlight intensity, where the screen backlight brightness for the DI M mode is less than that for the OFFICE mode which is less than that for the BRIGHT mode, and wherein said light level samples are obtained at a first sampling rate upon activation of said light sensor or in the event of a transition from said DIM mode to said OFFICE mode or said BRIGHT mode or from said OFFICE mode to said BRIGHT mode, and otherwise at a second sampling rate..

### BRIEF DESCRIPTION OF THE DRAWINGS

The method for automatically adjusting screen and keypad brightness on a mobile handheld electronic device will be better understood with reference to the following description and to the Figures, in which:

Figure 1 is a representation of a mobile handheld electronic device in connection with which a method for automatically adjusting screen and keypad brightness is set forth in accordance with one embodiment;

Figure 2 is a block diagram of certain internal components within the electronic device of Figure 1;

Figure 3 is a flowchart showing steps in a method for automatically adjusting screen brightness in the electronic device of Figure 1;

Figure 4 is a flowchart showing steps in the method of Figure 3 when the electronic device is in DIM mode;

Figure 5 is a flowchart showing steps in the method of Figure 3 when the electronic device is in OFFICE mode;

Figure 6 is a flowchart showing steps in the method of Figure 3 when the electronic device is in BRIGHT mode;

Figure 7 is a flowchart showing steps for automatically adjusting keypad brightness in the electronic device of Figure 1;

Figure 8 is a flow chart showing steps for controlling sample rate for the methods of Figures 3 and 7.

### DESCRIPTION OF PREFERRED EMBODIMENTS

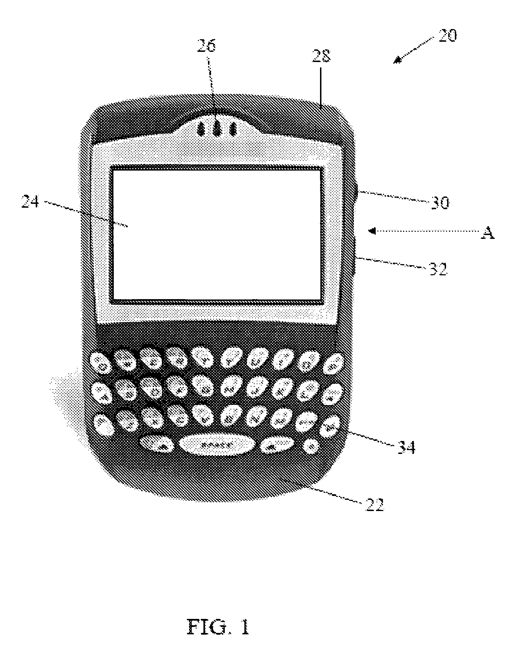

Referring to Figure 1, a mobile handheld electronic device is indicated generally by the numeral 20. In the present embodiment, the electronic device 20 is based on the computing environment and functionality of a wireless personal digital assistant. It will be understood, however, that the electronic device 20 is not limited to a wireless personal digital assistant. Other electronic devices are possible, such as desktop computers, cellular telephones, GPS receivers, smart telephones, and laptop computers. Referring again to the present embodiment, the electronic device 20 includes a housing 22 that houses a mechanical vibration means (not shown) and frames an LCD display 24, a speaker 26, a message notification indicator 28, a track wheel 30, an exit key 32 and a keypad 34. Preferably, the message notification indicator 28 is in the form of a light pipe having two internal branches terminating respectively in a Light Emitting Diode (LED) and an ambient light sensor, as set forth in co-pending United States patent application no. US 2007/0019433, filed July 25, 2005, and entitled SHARED LIGHT PIPE FORA MESSAGE INDICATOR AND LIGHT SENSOR. The track wheel 30 and the exit key 32 can be inwardly depressed along the path of arrow "A" as a means of providing additional user-input. The housing 22 is made from a suitable material as will occur to those skilled in the art, and can be stored, for example, in a holster (not shown) that includes an attachment for attaching to a user's belt.

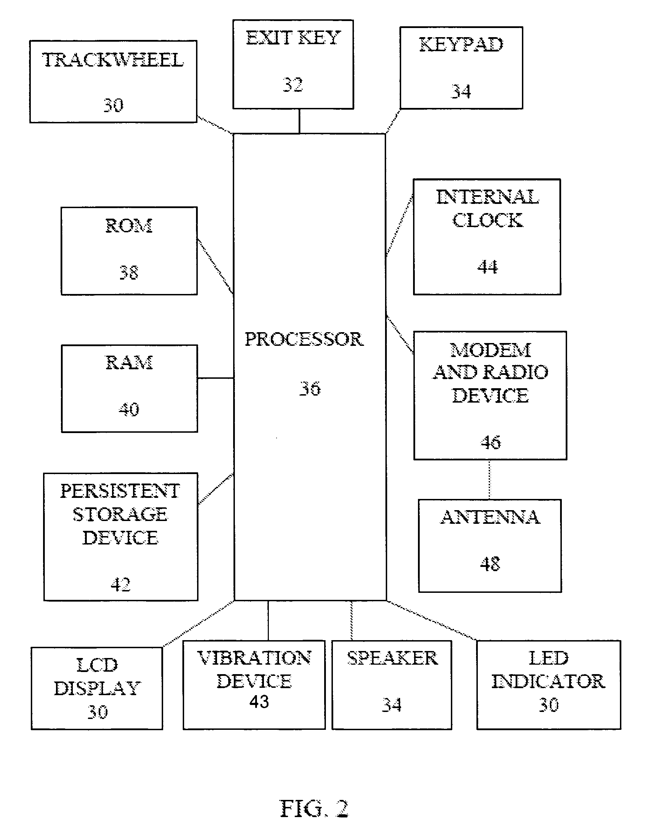

Referring now to Figure 2, a block diagram is provided of certain internal components within the device 20. The device 20 is based on a microcomputer including a processor 36 connected to a read-only-memory (ROM) 38 that contains a plurality of applications executable by the processor 36 for enabling the device 20 to perform certain functions. The processor 36 is also connected to a random access memory unit (RAM) 40 and a persistent storage device 42 which are responsible for various non-volatile storage functions of the device 20. The processor 36 receives input from various input devices including the track wheel 30, the exit key 32, and the keypad 34. The processor 36 outputs to various output devices including the LCD display 24, the speaker 26, the indicator 28 and the mechanical vibration device 43. The processor 36 is also connected to an internal clock 44 and a modem and radio device 46. The modem and radio device 46 are used to connect to various wireless networks using an antenna 48.

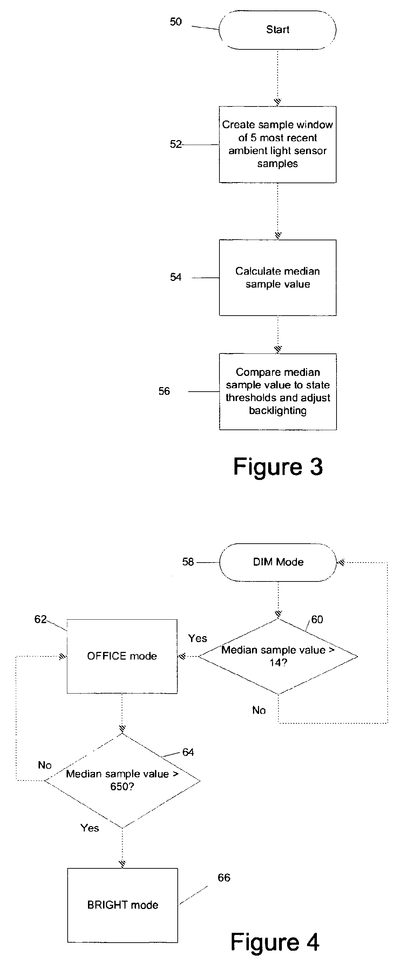

Reference is now made to Figure 3, showing a flowchart of a method for automatically adjusting screen 24 and keypad 34 brightness on the mobile handheld electronic device of Figures 1 and 2. The method is implemented by an algorithm within an application executable by the processor 36 to correctly switch between three screen-specific ambient lighting modes (referred to herein as DIM, OFFICE and BRIGHT, respectively) and two keypad-specific ambient lighting mode (referred to herein as KEYPAD-ON and KEYPAD-OFF, respectively. The screen-specific modes are determined independently of the keypad-specific modes. In DIM mode, the screen 24 backlight is dimmed for low lighting environment. In OFFICE mode, the screen 24 backlight is set to a brightness suitable for an office environment. In BRIGHT mode, and the screen 24 backlight is set at full brightness, suitable for legibility in bright sunlight (as indicated below, KEYPAD-OFF mode is enabled whenever BRIGHT mode is enabled). In KEYPAD-ON mode, the keypad backlight is turned on. In KEYPAD-OFF mode, the keypad backlight is turned off. The DIM, OFFICE, BRIGHT, KEYPAD-ON and KEYPAD-OFF modes are determined by detected ambient light conditions and operate to set the backlights to appropriate operating states, as discussed in greater detail below.

Each ambient lighting mode has a corresponding brightness/state value as set forth in Table A, where "%PWM" represents the duty cycle of a pulse width modulated signal of variable base frequency dependent on the specified duty cycle, and "Lux range" represents the range of ambient lighting intensity (measured in Lux units, where Lux represents the amount of visible light per square meter incident on a surface) in which each mode operates:

| TABLE A | | | | |
|---|---|---|---|---|
| Screen Backlight Mode | DIM mode | OFFICE mode | | BRIGHT mode |
| Lux range of ambient lighting | <70 | *16<Lux<4400* | | *3000<Lux* |
| Screen backlight brightness | 3%-6.5%PWM (based on 10%-100% brightness defined in Screen/Keyboard options screen) | 10%-40%PWM (based on 10%-100% brightness defined in Screen/Keyboard options screen) | | 100%PWM (this "overdrives" the backlight circuit) |
| | | | | |

| Keypad Backlight Mode | KEYPAD-ON | | KEYPAD-OFF | |
|---|---|---|---|---|
| Lux range for ambient lighting | <250 | | >60 | |
| Keypad backlight state | *ON* | | *OFF* | |

As indicated in Table A, the screen 24 backlight is adjustable in 5 or 10 discreet steps between 3% and 6.5% PWM, an additional 5 or 10 discreet steps from 10% to 40% PWM and may also be set to 100% PWM Backlight brightness control also permits a smoothly and quick fade (~200ms) and a slow fade (1-1.5s) between any of these steps (in addition to the off state). The keypad 34 backlight is adjustable in at least 5 discreet steps from 0% to 100%PWM, allowing for a smooth quick fade (200ms) and a very slow fade (4-5 seconds, ideally) between each of these discreet levels and the off state.

Upon starting the algorithm (step 50) when the device 20 is turned on, the backlight mode is normally initialized to an appropriate mode using the ambient lighting sensed by the light sensor at that time. Next, light sensor samples are taken at set intervals and maintained in a buffer containing the five most recent samples at any given time (step 52). This buffer is referred to as the sample window because it is a moving window such that when each new sample is received, the oldest sample in the window is discarded from the buffer. The amount of time between each light sensor sample determines the sampling rate. A typical sampling rate is one sample per 1.2 seconds although in some situations the sampling rate may be increased to 400ms temporarily for 5 samples to facilitate quick adjustment of the screen and keypad backlights. At step 54, the median sample value is calculated by sorting all samples in the sample window and choosing the middle value (i.e. the third sample in the window).

When each sample is received, a new median in the sample window is calculated and compared to various thresholds (step 56) to determine if a backlight adjustment is necessary, according to the thresholds listed in state Table B, where ADC represents Analog to Digital Converter output values:

| TABLE B | | | |
|---|---|---|---|
| median light sensor ADC value | current mode is DIM | current mode is OFFICE | current mode is BRIGHT |
| <= 7 | n/a | Switch to DIM | Switch to DIM |
| >= 14 | switch to OFFICE | n/a | n/a |
| <= 450 | n/a | n/a | Switch to OFFICE |
| >= 650 | switch to BRIGHT | Switch to BRIGHT | n/a |

Keypad backlight modes are handled independently from the LCD backlight modes:

| | current mode is KEYPAD-ON | current mode is KEYPAD-OFF |
|---|---|---|
| <= 16 | n/a | switch to KEYPAD-ON |
| > 50 for 30 seconds | switch to KEYPAD-OFF | n/a |

The relationship between ADC threshold values expressed in Table B and light intensity values is as follows: ADC 7=16 Lux, ADC 14= 70 Lux, 16 ADC = 60 Lux, 50 ADC = 250 Lux, ADC 450 = 3000 Lux, and ADC 650 = 4400 Lux. Operation of the state Table B is depicted in the flowcharts of Figure 4, 5 and 6.

Thus, as shown in Figure 4, when the backlighting is in DIM mode, the median sample value is compared (step 58) to a threshold value of 14 (70 Lux) and if the value is greater than 14 OFFICE mode of backlight operation is selected (step 62) wherein the screen 24 backlight is at a brightness suitable for an office environment. However, if the median sample value is greater than 650 (step 64) then BRIGHT mode of backlight operation is selected (step 66) wherein the screen 24 backlight is set to full brightness.

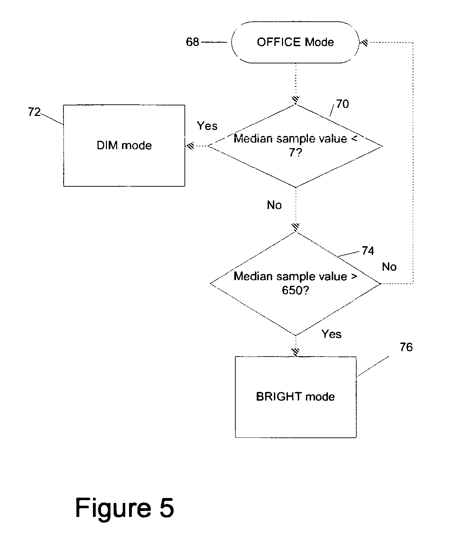

As shown in Figure 5, when the backlighting is in OFFICE mode (step 68), the median sample value is compared (step 70) to a threshold value of 7 (16 Lux) and if the value is less than 7 DIM mode of backlight operation is selected (step 72) wherein the screen 24 backlight is dimmed. However, if the median sample value is greater than 650 (step 74) then BRIGHT mode of backlight operation is selected (step 76) wherein the screen 24 backlight is set to full brightness.

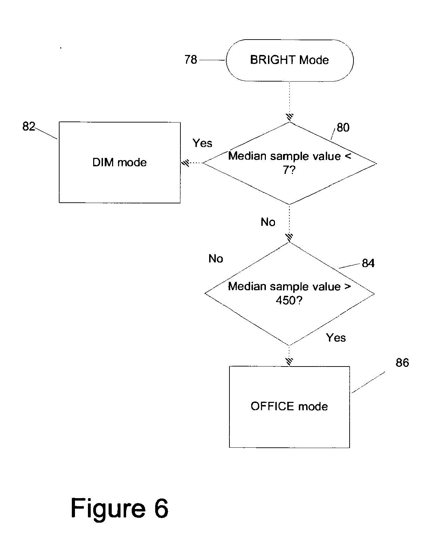

As shown in Figure 6, when the backlighting is in BRIGHT mode (step 78), the median sample value is compared (step 80) to a threshold value of 7 and if the value is less than 7 DIM mode of backlight operation is selected (step 82) wherein the screen 24 backlight is dimmed. If the median sample value is less than 450 (step 84) then OFFICE mode of backlight operation is selected (step 86) wherein the screen 24 backlight is at a brightness suitable for an office environment.

From Figures 4 and 5, it will be noted that the threshold for changing from DIM mode to OFFICE mode is higher than the threshold for changing from OFFICE to DIM mode. This compensates for situations where the ambient lighting is hovering around a particular threshold value and prevents constant transitioning between backlight states. A similar hysteresis is integrated into the threshold values between the OFFICE and BRIGHT modes (Figures 5 and 6).

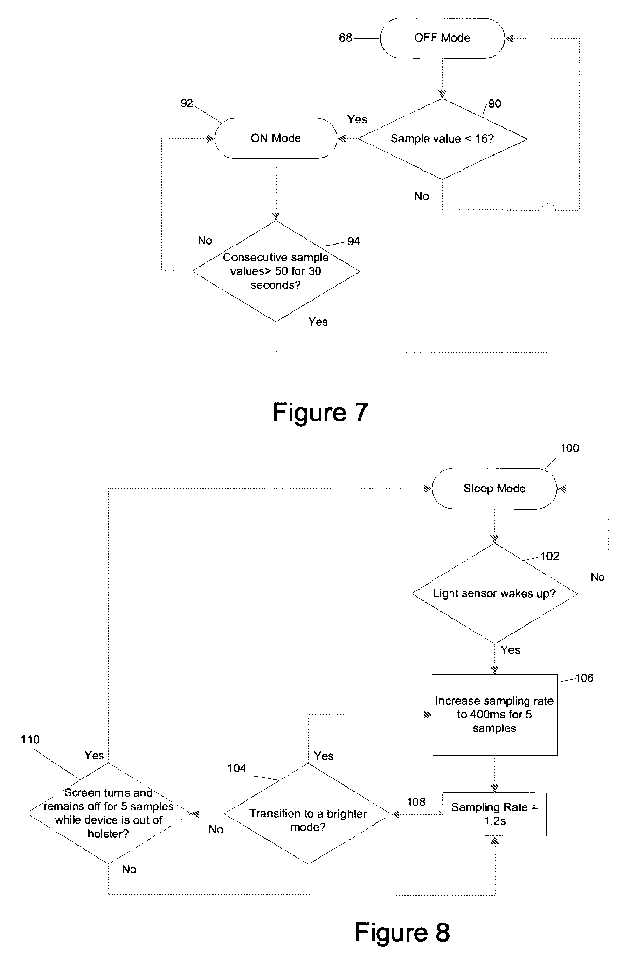

As indicated above, keypad 34 lighting is controlled independently of screen 24 backlighting to allow the keypad to respond more quickly to dim environments, and to allow the LCD screen to respond more quickly to office and bright or sunlight environments. Hence, it is possible for the screen backlight to be in OFFICE or BRIGHT mode while the keypad backlight is still in KEYPAD-ON mode (temporarily). As set forth in Figure 7, while the keypad backlight is OFF (step 88), each sample value (rather than the median sample value) is compared (step 90) to a threshold value of 16 and if the value is less than 16 the keypad 34 backlight turns on right away (step 92). This ensures that the user does not have to wait to type if they are unable to see the keypad 34. This means that the keypad may sometimes turn on prematurely when the device 20 is not actually in a dim or dark environment but a single sample less than 16 is received for some reason. This ensures that the keypad 34 is never unusable, even though slightly more battery is drawn and the user may become slightly confused as to why the keypad backlight appears to turn on "randomly" in some circumstances. Ideally, the keypad 34 should turn on quickly (about 200ms) after receiving a single "dim" sample but fade off very slowly so that it is barely noticeable (e.g. 5-10 seconds). This helps to remove distraction (and possible confusion) when the LCD screen 24 backlight is turned off.

While the keypad backlight is ON, consecutive sample values are compared (step 94) to a threshold value of 50 and once 30 seconds of contiguous samples greater than 50 have been received the keypad 34 is turned OFF (step 88). This avoids the possibility of "thrashing" the keypad backlight on and off in highly variable lighting environments, which would be quite distracting and annoying to the user.

By using the median sample in the sample window for mode-change decisions, brief lighting fluctuations (e.g. bright flashes lasting less than about 800ms) are effectively filtered out while still providing an acceptably quick response to entering an area with bright sunlight or pulling the device out of the holster in bright sunlight. Transitioning through a dim environment for less than about 5 seconds is also ignored because all five samples in the sample window are required to be less than the threshold value for the currently active mode to affect a mode change. Since it takes several seconds for a user's eyes to adjust to a dimmer environment, the LCD screen 24 brightness is permitted by the algorithm to adjust gradually.

As shown in Figure 8, light sensor samples are not taken (i.e. sleep mode) while the device 20 is off or in the holster (step 100) in order to save battery life and because samples are not likely to be valid because the light sensor is likely covered by an arm (device 20 is in holster) or in a bag or a pocket. When the light sensor software "wakes up" (step 102), sampling and backlight adjustment begins (step 106) with a fast sampling rate (400ms) for the next five samples. The first sample received is used to initialize the entire sample window, if the second sample is brighter than the first, then this value is used to initialize the entire sample window. If the third sample is brighter than the first two, then it is used to initialize the sample window.

Thereafter, the normal sampling rate is one sample every 1.2 seconds (step 108). Preferably, each light sensor sample is actually an average of multiple quick samples taken over a period of about 9ms. More particularly, at least 8 ADC readings are taken over a 9ms period so that they can be averaged out so as to increase the reliability of each sample and filter out small variances in AC indoor lighting.

When the device 20 is pulled out of its holster, removed from a pocket or bag, etc., it is highly likely that the light sensor will be temporarily partially covered by the user's hand or shirt. This means that the first couple samples could be below the threshold for transitioning to DIM mode, even if the device 20 is operating in the OFFICE mode. Likewise, the first couple of samples could be indicative of OFFICE mode even though the device is in a bright environment. However, it is nearly impossible for a brighter sample to be received when the device is in a dim environment. Hence, as discussed above, the entire sample window is initialized to the greatest sample when the device 20 out of the holster.

If the screen 24 turns off due to a system timeout or the power button being pressed, but the device 20 has not been yet been turned off or returned to its holster (step 110), then light sensor sampling reverts to sleep mode (step 100) provided the screen 24 does not turn back on within the time it takes to receive the next five samples. This five sample delay is provided because the screen 24 may time out while the user is reading the screen. It is common for a user to handle this situation by hitting a key to immediately wake up the screen again (which turns on the backlight). In this case, the sample window is not reset to sleep mode. If the LCD screen 4 stays off for more than a few seconds then the sample window is reset to sleep mode due to the likelihood that the device environment has changed.

Based on the foregoing, LCD screen 24 brightness responds to a change from a dimmer to a brighter environment within 800ms to 2 seconds. This is the amount of time that it takes to receive three brighter samples (which sets the median of the 5-sample window). The first sample in a brighter environment triggers the fast 400ms sampling rate (step 104). However, it can take up to 1.2 seconds before the first sample is received. LCD screen 24 brightness responds to a change from a brighter environment to a dimmer mode in about 6 seconds. It takes 5 consecutive samples in a dimmer mode to cause a transition to the new mode. When the screen 24 backlight brightness is adjusted downwardly, the backlight is slowly faded to the new brightness level. This fading takes from about 1 s to 1.5s.

As discussed above in connection with Figure 1, the light sensor and message indicating LED share a common light pipe. If the sampling algorithm of Figure 8 requires a light sensor sample to be taken while the LED is on, then the sample is delayed until immediately after the LED turns off, unless the device 20 is in the process of being pulled out of its holster. In this case, an initial low light sample is "faked" if the LED is on while removing the device 20 from its holster, etc. so as not to delay turning on the LCD screen 24 backlight (which cannot occur until a sample has been received). Each LED on/off transition is controlled so that the state information can be provided to the automatic backlight software set forth herein of LED on/off transitions.

Preferably, coarse timers are used in the described method (e.g. +/-12.5% variance). The use of coarse timers minimizes the number of times the processor 36 must wake up due to timer events. Consequently, all times referred to in this specification are characterized by a possible error of +/-12.5%.

If the power button of device 20 is pressed, the screen 24 brightness is increased significantly. This overrides the brightness adjustment algorithm temporarily until the screen is turned off, and normal screen brightness adjustment resumes when the screen 24 turns back on again.

The light sensor functionality set forth herein may be altered or disabled by the user via an "Automatic Backlight" option accessible through a Screen/Keyboard options screen displayed by device 20. This enables backlight functionality which allows the user to press the power button to cycle between 1) user-selected brightness; 2) super-bright; and 3) backlight/LCD off. When the LCD screen 24 is on, the keypad 34 backlight is always on. When the LCD screen 24 is off, the keypad 34 backlight is always off.

While the embodiments described herein are directed to particular implementations of the method for automatically adjusting screen and keypad brightness on a mobile handheld electronic device, it will be understood that modifications and variations to these embodiments are within the scope and sphere of the present application. For example, as indicated above the backlighting brightness adjustment methodology set forth herein is not limit in its application to handheld electronic devices but may advantageously applied to other electronic devices such as desktop computers, cellular telephones, GPS receivers, smart telephones, and laptop computers. Also, it is contemplated that the keypad backlighting, although independent of LCD screen backlighting adjustment, may advantageously transition between various lighting modes (such as DIM, OFFICE and BRIGHT) rather than simply switching between ON and OFF. Many other modifications and variations may occur to those skilled in the art. All such modifications and variations are believed to be within the sphere and scope of the present application.

## Claims

1. A method for automatically adjusting screen and keypad brightness on a mobile electronic device (20) having a light sensor, a display screen (24) and a keypad (34), comprising:
obtaining light level samples from said light sensor; and
adjusting backlight intensity of said display screen (24) independently of backlight intensity of said keypad (34) responsive to said light level samples, wherein adjusting the backlight intensity of said display screen (24) further comprises comparing a median value of said samples to respective threshold values corresponding to screen-specific ambient lighting modes designated as 'DIM', 'OFFICE' and 'BRIGHT' modes of backlight intensity, where the screen backlight brightness for the DIM mode is less than that for the OFFICE mode which is less than that for the BRIGHT mode, and wherein said light level samples are obtained at a first sampling rate upon activation of said light sensor or in the event of a transition from said DIM mode to said OFFICE mode or said BRIGHT mode or from said OFFICE mode to said BRIGHT mode, and otherwise at a second sampling rate.

2. The method of claim 1, wherein said backlight intensity is adjusted in accordance with any one of the following:
from DIM mode to OFFICE mode in the event said median value of said samples is greater than approximately 70 Lux;
from DIM mode to BRIGHT mode in the event said median value of said samples is greater than approximately 4400 Lux;
from OFFICE mode to DIM mode in the event said median value of said samples is less than approximately 16 Lux;
from OFFICE mode to BRIGHT mode in the event said median value of said samples is greater than approximately 4400 Lux;
from BRIGHT mode to DIM mode in the event said median value of said samples is less than approximately 16 Lux; or
from BRIGHT mode to OFFICE mode in the event said median value of said samples is less than approximately 3000 Lux.

3. The method of claim 1 or claim 2, wherein the backlight intensity of said keypad (34) is adjusted from an OFF mode to an ON mode in the event a current light level sample is less than a first threshold value and from an ON mode to an OFF mode in the event said current light level sample is greater than a second threshold value for a predetermined time period.

4. The method of claim 3, wherein said first threshold value is approximately 60 Lux.

5. The method of claim 3 or claim 4, wherein said second threshold value is approximately 250 Lux and said predetermined time period is approximately 30 seconds.

6. The method of any one of the foregoing claims, wherein said median value is calculated from five consecutive ones of said light level samples.

7. The method of any one of the foregoing claims, wherein said first sampling rate is maintained for five samples whereupon further light level samples are obtained at said second sampling rate.

8. The method of claim 7, wherein said first sampling rate is one sample per approximately 400 ms and said second sampling rate is one sample per approximately 1.2 ms.

9. The method of claim 8, wherein said first and second sampling rates are each subject to a variance of approximately +/-12.5%.

10. The method of claim 6, wherein said median value is calculated by sorting and selecting the third of said five samples.

11. The method of any one of claims 3 to 5, wherein the backlight intensity of said keypad (34) is adjusted from an ON mode to OFF mode in response to consecutive light level samples greater than said second threshold value for approximately 30 seconds.

12. A handheld electronic device (20) comprising means (36) for implementing in said device (20) the method of any one of claims 1 to 11.

13. A computer program product comprising a computer readable medium arranged to store executable code means which, when executed by a processor (36) of a handheld electronic device (20) implements the method of any one of claims 1 to 11.

14. A communications system comprising a plurality of handheld electronic devices (20) of claim 12.

## Patentansprüche

1. Verfahren zur automatischen Helligkeitsanpassung für Bildschirm und Tastatur eines mobilen elektronischen Gerätes (20), das über einen Lichtsensor, einen Anzeigebildschirm (24) und eine Tastatur (34) verfügt, umfassend:
das Gewinnen von Lichtstärkeproben aus dem Lichtsensor; und
das Anpassen der Hintergrundbeleuchtungsintensität des Anzeigebildschirms (24) unabhängig von der Hintergrundbeleuchtungsintensität der Tastatur (34) und als Reaktion auf die Lichtstärkeproben, wobei das Anpassen der Hintergrundbeleuchtungsintensität des Anzeigebildschirms (24) des Weiteren das Vergleichen eines Medianwertes der Proben mit jeweiligen Schwellenwerten umfasst, die bildschirmspezifischen Umgebungsbeleuchtungsmodi entsprechen, welche als Modi 'DUNKEL', 'BÜRO' und 'HELL' der Hintergrundbeleuchtungsintensität ausgewiesen sind, wobei die Bildschirmhintergrundbeleuchtungshelligkeit für den DUNKEL-Modus geringer ist als die für den BÜRO-Modus, welche geringer ist als die für den HELL-Modus, und wobei die Lichtstärkeproben mit einer ersten Abtastrate gewonnen werden, wenn der Lichtsensor aktiviert wird oder im Falle eines Übergangs von dem DUNKEL-Modus zu dem BÜRO-Modus oder zu dem HELL-Modus oder von dem BÜRO-Modus zu dem HELL-Modus, und ansonsten mit einer zweiten Abtastrate gewonnen werden.

2. Verfahren gemäß Anspruch 1, wobei das Anpassen der Hintergrundbeleuchtungsintensität gemäß einem der Folgenden erfolgt:
vom DUNKEL-Modus zum BÜRO-Modus in dem Fall, dass der Medianwert der Proben größer als ungefähr 70 Lux ist;
vom DUNKEL-Modus zum HELL-Modus in dem Fall, dass der Medianwert der Proben größer als ungefähr 4400 Lux ist;
vom BÜRO-Modus zum DUNKEL-Modus in dem Fall, dass der Medianwert der Proben kleiner als ungefähr 16 Lux ist;
vom BÜRO-Modus zum HELL-Modus in dem Fall, dass der Medianwert der Proben größer als ungefähr 4400 Lux ist;
vom HELL-Modus zum DUNKEL-Modus in dem Fall, dass der Medianwert der Proben kleiner als ungefähr 16 Lux ist; oder
vom HELL-Modus zum BÜRO-Modus in dem Fall, dass der Medianwert der Proben kleiner als ungefähr 3000 Lux ist.

3. Verfahren gemäß Anspruch 1 oder Anspruch 2, wobei die Hintergrundbeleuchtungsintensität der Tastatur (34) von einem AUS-Modus zu einem EIN-Modus angepasst wird, falls eine aktuelle Lichtstärkeprobe geringer ist als ein erster Schwellenwert, und von einem EIN-Modus zu einem AUS-Modus angepasst wird, falls die aktuelle Lichtstärkeprobe für eine vorgegebene Zeitdauer größer ist als ein zweiter Schwellenwert.

4. Verfahren gemäß Anspruch 3, wobei der erste Schwellenwert ungefähr 60 Lux beträgt.

5. Verfahren gemäß Anspruch 3 oder Anspruch 4, wobei der zweite Schwellenwert ungefähr 250 Lux beträgt und die vorgegebene Zeitdauer ungefähr 30 Sekunden beträgt.

6. Verfahren gemäß einem der vorherigen Ansprüche, wobei der Medianwert aus fünf aufeinander folgenden Einzelwerten der Lichtstärkeproben berechnet wird.

7. Verfahren gemäß einem der vorherigen Ansprüche, wobei die erste Abtastrate für fünf Proben beibehalten wird, woraufhin weitere fünf Lichtstärkeproben mit der zweiten Abtastrate gewonnen werden.

8. Verfahren gemäß Anspruch 7, wobei die erste Abtastrate eine Probe pro ungefähr 400 ms beträgt und die zweite Abtastrate eine Probe pro ungefähr 1,2 ms beträgt.

9. Verfahren gemäß Anspruch 8, wobei die erste und die zweite Abtastrate jeweils einer Abweichung von ungefähr +/- 12,5 % unterliegen.

10. Verfahren gemäß Anspruch 6, wobei der Medianwert durch Sortieren und Auswählen der dritten aus den fünf Proben berechnet wird.

11. Verfahren gemäß einem der Ansprüche 3 bis 5, wobei das Anpassen der Hintergrundbeleuchtungsintensität der Tastatur (34) von einem EIN-Modus zu einem AUS-Modus als Reaktion darauf erfolgt, dass aufeinander folgende Lichtstärkeproben für ungefähr 30 Sekunden größer als der zweite Schwellenwert sind.

12. Tragbares elektronisches Gerät (20), umfassend Mittel (36) zur Implementierung des Verfahrens gemäß einem der Ansprüche 1 bis 11 in dem Gerät (20).

13. Computerprogrammprodukt, umfassend ein computerlesbares Medium, das zum Speichern ausführbarer Codemittel eingerichtet ist, die bei Ausführung durch einen Prozessor (36) eines tragbaren elektronischen Gerätes (20) das Verfahren gemäß einem der Ansprüche 1 bis 11 implementieren.

14. Kommunikationssystem, umfassend eine Vielzahl von tragbaren elektronischen Geräten (20) gemäß Anspruch 12.

## Revendications

1. Un procédé pour régler automatiquement la luminosité de l'écran et du mini-clavier sur un dispositif électronique mobile (20) ayant un capteur de lumière, un écran d'affichage (24) et un mini-clavier (34), comportant les étapes suivantes :
obtenir des échantillons de niveau de lumière à partir dudit capteur de lumière ; et
régler l'intensité de rétroéclairage dudit écran d'affichage (24) indépendamment de l'intensité de rétroéclairage dudit mini-clavier (34) en réponse auxdits échantillons de niveau de lumière, où régler l'intensité de rétroéclairage dudit écran d'affichage (24) comporte de plus comparer une valeur médiane desdits échantillons avec des valeurs de seuil respectives correspondant à des modes d'éclairage ambiant spécifiques à l'écran désignés par les modes d'intensité de rétroéclairage "ATTÉNUÉ", "BUREAU" et "LUMINEUX", où la luminosité de rétroéclairage de l'écran pour le mode ATTÉNUÉ est inférieure à celle du mode BUREAU qui est elle-même inférieure à celle du mode LUMINEUX, et où lesdits échantillons de niveau de lumière sont obtenus à une première fréquence d'échantillonnage après activation dudit capteur de lumière ou en cas de transition dudit mode ATTÉNUÉ audit mode BUREAU ou audit mode LUMINEUX ou dudit mode BUREAU audit mode LUMINEUX, et sinon à une deuxième fréquence d'échantillonnage.

2. Le procédé de la revendication 1, dans lequel ladite intensité de rétroéclairage est réglée conformément à n'importe quel critère parmi les critères suivants :
du mode ATTÉNUÉ au mode BUREAU dans le cas où ladite valeur médiane desdits échantillons est supérieure à approximativement 70 lux ;
du mode ATTÉNUÉ au mode LUMINEUX dans le cas où ladite valeur médiane desdits échantillons est supérieure à approximativement 4 400 lux ;
du mode BUREAU au mode ATTÉNUÉ dans le cas où ladite valeur médiane desdits échantillons est inférieure à approximativement 16 lux ;
du mode BUREAU au mode LUMINEUX dans le cas où ladite valeur médiane desdits échantillons est supérieure à approximativement 4 400 lux ;
du mode LUMINEUX au mode ATTÉNUÉ dans le cas où ladite valeur médiane desdits échantillons est inférieure à approximativement 16 lux ; ou
du mode LUMINEUX au mode BUREAU dans le cas où ladite valeur médiane desdits échantillons est inférieure à approximativement 3 000 lux.

3. Le procédé de la revendication 1 ou de la revendication 2, dans lequel l'intensité de rétroéclairage dudit mini-clavier (34) est réglée d'un mode ARRÊT à un mode MARCHE dans le cas où un échantillon de niveau de lumière actuel est inférieur à une première valeur de seuil et d'un mode MARCHE à un mode ARRÊT dans le cas où ledit échantillon de niveau de lumière actuel est supérieur à une deuxième valeur de seuil pendant une période de temps prédéterminée.

4. Le procédé de la revendication 3, dans lequel ladite première valeur de seuil est d'approximativement 60 lux.

5. Le procédé de la revendication 3 ou de la revendication 4, dans lequel ladite deuxième valeur de seuil est d'approximativement 250 lux et ladite période de temps prédéterminée est d'approximativement 30 secondes

6. Le procédé de n'importe laquelle des revendications précédentes, dans lequel ladite valeur médiane est calculée à partir de cinq échantillons consécutifs parmi lesdits échantillons de niveau de lumière.

7. Le procédé de n'importe laquelle des revendications précédentes, dans lequel ladite première fréquence d'échantillonnage est maintenue pendant cinq échantillons après quoi des échantillons de niveau de lumière supplémentaires sont obtenus à ladite deuxième fréquence d'échantillonnage.

8. Le procédé de la revendication 7, dans lequel ladite première fréquence d'échantillonnage est d'approximativement un échantillon toutes les 400 ms et ladite deuxième fréquence d'échantillonnage est d'approximativement un échantillon toutes les 1,2 ms.

9. Le procédé de la revendication 8, dans lequel lesdites première et deuxième fréquences d'échantillonnage sont chacune sujettes à une variance d'approximativement +/-12,5 %.

10. Le procédé de la revendication 6, dans lequel ladite valeur médiane est calculée en triant et en sélectionnant le troisième desdits cinq échantillons.

11. Le procédé de n'importe laquelle des revendications 3 à 5, dans lequel l'intensité de rétroéclairage dudit mini-clavier (34) est réglée d'un mode MARCHE à un mode ARRÊT en réponse à des échantillons de niveau de lumière consécutifs supérieurs à ladite deuxième valeur de seuil pendant approximativement 30 secondes.

12. Un dispositif électronique portatif (20) comportant des moyens (36) pour implémenter dans ledit dispositif (20) le procédé de n'importe laquelle des revendications 1 à 11.

13. Un produit de programme informatique comportant un support lisible par ordinateur agencé pour stocker des moyens de code exécutables qui, lorsqu'ils sont exécutés par un processeur (36) d'un dispositif électronique portatif (20), implémentent le procédé de n'importe laquelle des revendications 1 à 11.

14. Un système de communication comportant une pluralité de dispositifs électroniques portatifs (20) de la revendication 12.
